Europäisches Patentamt

European Patent Office

Office européen des brevets

(11) Numéro de publication: **0 505 976 B1**

## FASCICULE DE BREVET EUROPEEN

(45) Date de publication de fascicule du brevet: **21.09.94**

(51) Int. Cl.⁵: **B06B** 1/16, F16F 15/00, F16F 15/22, G05D 19/02

(21) Numéro de dépôt: **92105038.1**

(22) Date de dépôt: **24.03.92**

(54) **Dispositif pour compenser une force vibratoire ou un couple vibratoire subi par une corps.**

(30) Priorité: **28.03.91 FR 9103771**

(43) Date de publication de la demande:
**30.09.92 Bulletin 92/40**

(45) Mention de la délivrance du brevet:
**21.09.94 Bulletin 94/38**

(84) Etats contractants désignés:
**AT BE CH DE DK ES FR GB GR IT LI LU MC NL PT SE**

(56) Documents cités:
**EP-A- 0 337 040**

(73) Titulaire: **ACB**
**30 avenue Kléber**
**F-75116 PARIS (FR)**

(72) Inventeur: **Legouis, Thierry**
**71, rue du Bois Brûlé**
**F-44115 Basse Goulaine (FR)**
Inventeur: **de Larminat, Philippe**
**15, rue des Dames**
**F-35000 Rennes (FR)**
Inventeur: **Guglielmi, Michel**
**31, rue du Général Buat**
**F-44000 Anntes (FR)**

(74) Mandataire: **Weinmiller, Jürgen et al**
**Lennéstrasse 9**
**Postfach 24**
**D-82336 Feldafing (DE)**

**Description**

On connaît par le document EP-A- 0337040 publié le 18 octobre 1989, un dispositif pour compenser une force vibratoire F créée par un corps. Ce dispositif comporte quatre masselottes tournantes, excentrées, situées dans un même plan P contenant le centre de gravité dudit corps vibrant, chaque masselotte étant entraînée par un moteur électrique, les axes de rotation des masselottes étant parallèles, perpendiculaires au plan P et liés audit corps, les quatre masselottes comprenant une première paire de masselottes tournant en sens inverse l'une par rapport à l'autre et dont les axes de rotation sont symétriques par rapport à un plan $P_1$ contenant le centre de gravité dudit corps vibrant et perpendiculaire au plan P, et une deuxième paire de masselottes tournant en sens inverse l'une par rapport à l'autre et dont les axes de rotation sont symétriques par rapport audit plan $P_1$, les quatre masselottes tournant à la même vitesse $\omega$, les masselottes de la première paire générant chacune une force tournante $F_1$ située dans le plan P, et se décomposant en une première composante parasite, sinusoïdale, selon un axe perpendiculaire au plan $P_1$ et en une seconde composante utile, sinusoïdale sur l'axe $\Delta$ formé par l'intersection des plans P et $P_1$, confondu avec la ligne d'application de la force F, les composantes parasites des forces tournantes de ladite première paire se compensant l'une l'autre et les composantes utiles étant en phase et de même amplitude, les masselottes de la seconde paire générant également deux forces tournantes situées dans ledit plan P et se décomposant chacune également en une première composante parasite, sinusoïdale selon un axe perpendiculaire au plan $P_1$ et en une seconde composante utile, sinusoïdale sur ledit axe $\Delta$, les composantes parasites des forces tournantes de ladite seconde paire se compensant l'une l'autre et les composantes utiles étant en phase et de même amplitude et étant déphasées d'un angle $2\theta$ par rapport aux composantes utiles des forces tournantes de la première paire, au moins un accéléromètre sur chaque paire étant connecté à un calculateur travaillant en temps réel et réalisant à la fois le calcul des valeurs estimées de la fréquence, de l'amplitude, de la phase et de la variation éventuelle de la fréquence au moyen d'un filtre adaptatif, non linéaire, et l'asservissement des quatre moteurs grâce à des signaux provenant de codeurs angulaires disposés sur chacun desdits moteurs.

On connaît également par ce même document un dispositif pour compenser un couple vibratoire créé par un corps. Le dispositif comprend quatre masselottes tournantes excentrées tournant à la même vitesse $\omega$, chaque masselotte étant entraînée par un moteur électrique, les axes de rotation des masselottes étant parallèles au vecteur moment du couple vibratoire à compenser et étant liés audit corps, les quatre masselottes comprenant une première paire de masselottes tournant l'une et l'autre dans le même sens dans un même plan $P_2$ et dont les axes de rotation sont symétriques par rapport à un axe D perpendiculaire au plan $P_2$, et une deuxième paire de masselottes tournant l'une et l'autre dans le même sens dans un même plan $P_3$ parallèle ou confondu avec le plan $P_2$ et dont les axes de rotation sont symétriques par rapport à l'axe D, les masselottes de la première paire générant deux forces tournantes $F_2$ situées dans le plan $P_2$, constituant un simple couple appelé premier couple dont le vecteur moment est dirigé parallèlement à l'axe D et dont le module est sinusoïdal, les masselottes de la seconde paire générant également deux forces tournantes $F_2$ situées dans le plan $P_3$ constituant un simple couple appelé second couple dont le vecteur moment est dirigé parallèlement à l'axe D et dont le module est sinusoïdal, les modules des premier et second couples étant déphasés d'un angle $2\theta_1$ l'un par rapport à l'autre, au moins un accéléromètre sur chaque paire étant connecté à un calculateur travaillant en temps réel et réalisant à la fois le calcul des valeurs estimées de la fréquence, de l'amplitude, de la phase et de la variation éventuelle de la fréquence au moyen d'un filtre adaptatif, et l'asservissement des quatre moteurs grâce à des signaux provenant de codeurs angulaires disposés sur chacun desdits moteurs.

Dans les deux dispositifs, aussi bien celui pour compenser une force vibratoire F que celui pour compenser un couple vibratoire, le filtre adaptatif utilisé dans le calculateur travaillant en temps réel, est un filtre de Kalman qui calcule les estimations des paramètres du signal d'excitation à éliminer à partir du signal résultant résiduel $\epsilon(t)$.

Ce signal résiduel $\epsilon(t)$ est obtenu dans un calculateur à partir des signaux d'accélération $\gamma_1$ et $\gamma_2$ provenant des accéléromètres.

Or, ce signal résiduel $\epsilon(t)$ est un signal de très faible amplitude ce qui peut conduire à un fonctionnement aléatoire du système.

En outre compte tenu de la forme des équations du filtre de Kalman, plus le temps s'écoule et moins le filtre est capable de s'adapter à des éventuelles modifications des paramètres du signal d'excitation.

La présente invention a pour but de pallier ces inconvénients et a pour objet un dispositif pour compenser une force vibratoire F créée par un corps, le dispositif comportant quatre masselottes tournantes, excentrées, situées dans un même plan P contenant le centre de gravité dudit corps vibrant, chaque masselotte étant entraînée par un moteur électrique, les axes de rotation des masselottes étant parallèles, perpendiculaires au plan P et liés audit corps, les quatre masselottes comprenant une première paire de masselottes tournant en sens inverse l'une par rapport à l'autre et dont les axes de rotation sont symétriques par rapport à un plan $P_1$ contenant le centre de gravité dudit corps vibrant et perpendiculaire au plan P, et une deuxième paire de masselottes tournant en sens inverse l'une par rapport à l'autre et dont les axes de rotation sont symétriques par rapport audit plan $P_1$, les quatre masselottes tournant à la même vitesse $\omega$, les masselottes de la première paire générant chacune une force tournante $F_1$ située dans le plan P, et se décomposant en une première composante parasite, sinusoïdale, selon un axe perpendiculaire au plan $P_1$ et en une seconde composante utile, sinusoïdale sur l'axe $\Delta$ formé par l'intersection des plans P et $P_1$, confondu avec la ligne d'application de la force F, les composantes parasites des forces tournantes de ladite première paire se compensant l'une l'autre et les composantes utiles étant en phase et de même amplitude, les masselottes de la seconde paire générant également deux forces tournantes situées dans ledit plan P et se décomposant chacune également en une première composante parasite, sinusoïdale selon un axe perpendiculaire au plan $P_1$ et en une seconde composante utile, sinusoïdale sur ledit axe $\Delta$, les composantes parasites des forces tournantes de ladite seconde paire se compensant l'une l'autre et les composantes utiles étant en phase et de même amplitude et étant déphasées d'un angle $2\theta$ par rapport aux composantes utiles des forces tournantes de la première paire, au moins un accéléromètre sur chaque paire étant connecté à un calculateur travaillant en temps réel et réalisant à la fois le calcul des valeurs estimées de la fréquence, de l'amplitude, de la phase et de la variation éventuelle de la fréquence au moyen d'un filtre adaptatif de Kalman non linéaire qui calcule les estimations des paramètres du signal d'excitation à éliminer à partir d'un signal résiduel, et l'asservissement des quatre moteurs grâce à des signaux provenant de codeurs angulaires disposés sur chacun desdits moteurs, caractérisé en ce que ledit filtre adaptatif reçoit sur son entrée un signal qui est la reconstitution du signal F à compenser obtenu en sommant le signal résiduel $\epsilon(t)$ et le signal image $\hat{F}_a$ représentatif de la force résultante générée par les masselottes, ledit signal $\hat{F}_a$ étant obtenu à partir des signaux en provenance desdits codeurs angulaires, ledit filtre adaptatif non linéaire étant un filtre de Kalman à gains constants.

L'invention a aussi pour objet un dispositif pour compenser un couple vibratoire C créé par un corps, le dispositif comprenant quatre masselottes tournantes excentrées tournant à la même vitesse $\omega$, chaque masselotte étant entraînée par un moteur électrique, les axes de rotation des masselottes étant parallèles au vecteur moment du couple vibratoire à compenser et étant liés audit corps, les quatre masselottes comprenant une première paire de masselottes tournant l'une et l'autre dans le même sens dans un même plan $P_2$ et dont les axes de rotation sont symétriques par rapport à un axe D perpendiculaire au plan $P_2$, et une deuxième paire de masselottes tournant l'une et l'autre dans le même sens dans un même plan $P_3$ parallèle ou confondu avec le plan $P_2$ et dont les axes de rotation sont symétriques par rapport à l'axe D, les masselottes de la première paire générant deux forces tournantes $F_2$ situées dans le plan $P_2$, constituant un simple couple appelé premier couple dont le vecteur moment est dirigé parallèlement à l'axe D et dont le module est sinusoïdal, les masselottes de la seconde paire générant également deux forces tournantes $F_2$ situées dans le plan $P_3$ constituant un simple couple appelé second couple dont le vecteur moment est dirigé parallèlement à l'axe D et dont le module est sinusoïdal, les modules des premier et second couples étant déphasés d'un angle $2\theta_1$ l'un par rapport à l'autre, au moins un accéléromètre sur chaque paire étant connecté à un calculateur travaillant en temps réel et réalisant à la fois le calcul des valeurs estimées de la fréquence, de l'amplitude, de la phase et de la variation éventuelle de la fréquence au moyen d'un filtre adaptatif de Kalman non linéaire qui calcule les estimations des paramètres du signal d'excitation à éliminer à partir d'un signal résiduel, et l'asservissement des quatre moteurs grâce à des signaux provenant de codeurs angulaires disposés sur chacun desdits moteurs, caractérisé en ce que ledit filtre adaptatif reçoit sur son entrée un signal qui est la reconstitution du signal C à compenser obtenu en sommant le signal résiduel $\epsilon(t)$ et le signal image $\hat{C}_a$ représentatif du couple résultant généré par lesdites masselottes, ledit signal $\hat{C}_a$ étant obtenu à partir des signaux en provenance desdits codeurs angulaires, ledit filtre adaptatif non linéaire étant un filtre de Kalman à gains constants.

L'invention va maintenant être décrite en se reportant au dessin annexé dans lequel :

La figure 1 est une représentation schématique théorique d'un dispositif pour compenser une force vibratoire selon l'invention.

La figure 2 est une représentation schématique théorique d'un dispositif pour compenser un couple vibratoire.

La figure 3 donne un exemple de montage d'un compensateur de force.

La figure 4 donne un exemple de montage d'un compensateur de couple.

La figure 5 est un schéma simplifié montrant le dispositif de commande.

La figure 6 est un schéma similaire à celui de la figure 5 mais pour la compensation d'un couple vibratoire.

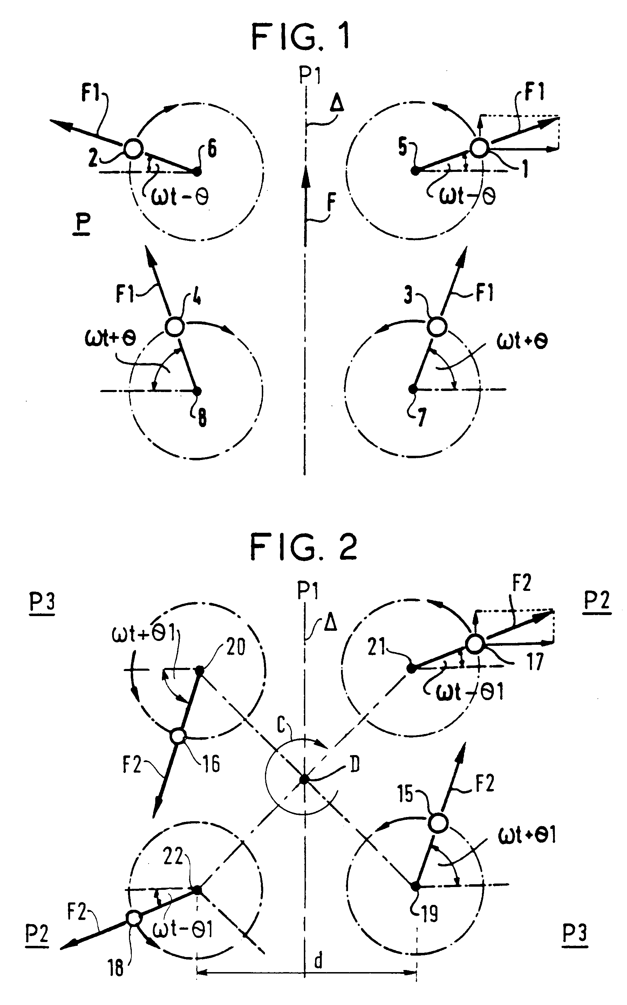

En se référant à la figure 1, soit une force vibratoire, de module F et de fréquence $\frac{\omega}{2\pi}$ située sur un axe Δ, subie par un corps. Le dispositif de compensation comprend quatre masselottes identiques tournantes excentrées 1, 2, 3 et 4, entraînées chacune par un moteur électrique.

Les axes des masselottes sont parallèles et liés au corps soumis à vibration. Les axes de rotation 5 et 6 de la première paire de masselottes 1 et 2 sont symétriques l'un l'autre par rapport à un plan P₁ passant par l'axe Δ et perpendiculaire au plan P de rotation des masselottes. Les masselottes 1 et 2 de cette première paire tournent à la même vitesse ω, en sens inverse l'une de l'autre symétriquement par rapport au plan P₁ créant ainsi deux forces tournantes égales F₁ dont les lignes d'action se coupent sur l'axe Δ et se décomposant en deux composantes parasites sinusoïdales se compensant l'une l'autre de valeur F₁ cos (ωt - θ) et -F₁ cos (ωt - θ) sur un axe perpendiculaire à l'axe Δ et en deux compasantes utiles sinusoïdales sur l'axe Δ de même valeur : F₁ sin (ωt - θ) produisant ainsi une force le long de l'axe Δ d'une valeur égale à 2F₁ sin (ωt - θ).

De même, les axes de rotation 7 et 8 de la seconde paire de masselottes 3 et 4 sont symétriques l'un l'autre par rapport au plan P₁ passant par Δ et perpendiculaire au plan P. Ces masselottes 3 et 4 tournent également en sens inverse l'une de l'autre à la même vitesse ω mais déphasées d'un angle 2θ par rapport aux masselottes 1 et 2 de la première paire. Ces masselottes produisent également deux forces tournantes F₁ se décomposant comme précédemment en deux composantes parasites perpendiculaires au plan P et se compensant l'une l'autre et en deux composantes utiles sur l'axe Δ de même valeur F₁ sin (ωt + θ) produisant sur l'axe Δ un effort égal à 2F₁ sin (ωt + θ).

En définitive, le long de l'axe Δ on obtient deux forces dont l'une, donnée par la première paire de masselottes vaut 2F₁ sin (ωt - θ) et l'autre, donnée par la seconde paire de masselottes vaut 2F₁ sin (ωt + θ). Ces deux forces conjuguées donnent finalement une force égale à : 4 F₁ sinωt cosθ. On voit donc qu'en respectant la condition F = 4F₁ cosθ, c'est-à-dire encore cosθ = F/4 m ω²r, où m et r sont la masse de chaque masselotte et leur excentrement, le dispositif compense exactement, à la fréquence ω/2π Hz, la force vibratoire parasite F.

En pratique, chaque masse peut être réalisée par une biellette ou encore par un disque homogène sur lequel on dispose un balourd. Cette pièce peut être par exemple, montée directement sur l'arbre de sortie de son moteur d'entraînement par l'intermédiaire d'un accouplement flexible.

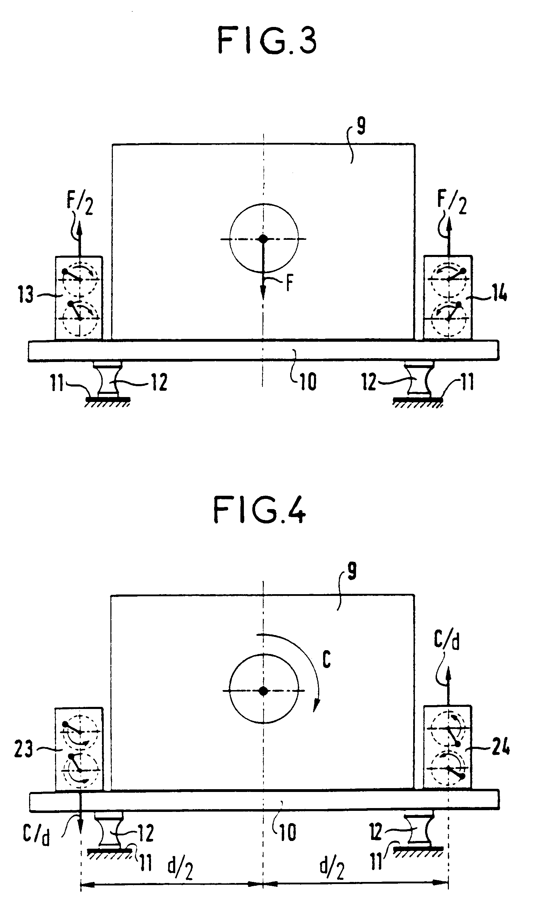

Les figures 3 et 4 montrent l'utilisation du dispositif dans le cas d'une machine 9 générant soit une force, soit un couple vibratoire et se trouvant sur un socle 10 lui même reposant sur le sol 11 par l'intermédiaire de supports 12.

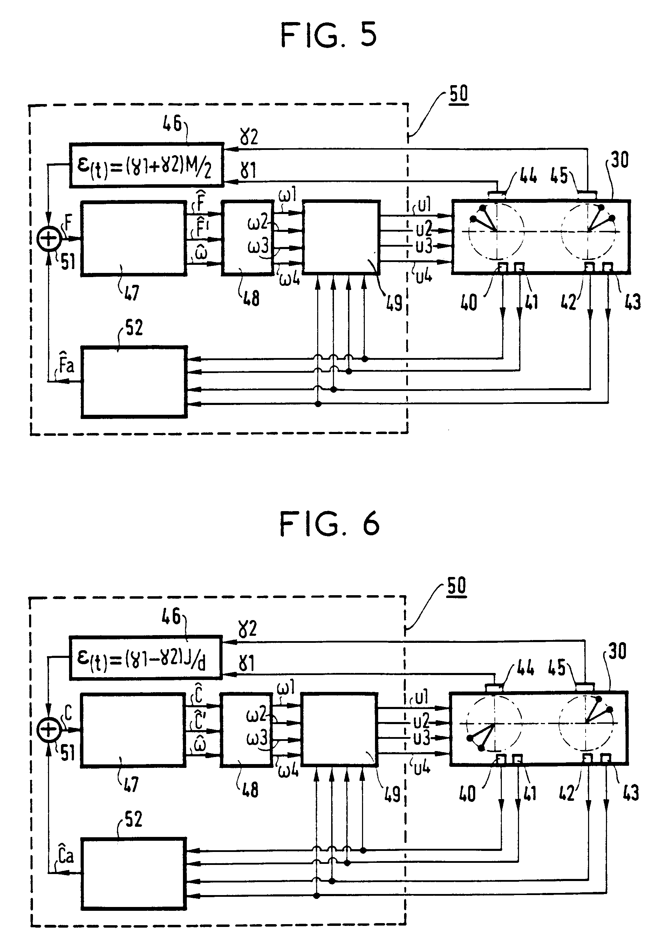

Les masses 2 et 4 sont placées à l'intérieur d'une boîte 13 contenant également les moteurs d'entraînement et les masses 1 et 3 sont placées à l'intérieur d'une boîte 14 contenant de même les moteurs électriques d'entraînement. Ces boîtes sont placées symétriquement par rapport à l'effort F à compenser. Elles sont fixées sur le socle 10 et elles contiennent chacune un accéléromètre donnant les signaux permettant, par le dispositif de commande représenté figure 5 et décrit plus loin, de commander la vitesse des moteurs tout en ajustant l'angle de déphasage θ.

Sur la figure 1 on a représenté les ces 5 et 6 avec le même écartement que celui des axes 7 et 8 mais cet écartement pourrait être différent.

La figure 2 montre le schéma théorique d'un dispositif compensateur de couple de module C et de fréquence ω/2π.

Il comporte également quatre masselottes excentrées 15, 16, 17 et 18 tournant à la même vitesse ω et étant chacune entraînée par un moteur électrique autour des axes respectifs de rotation 19, 20, 21 et 22 liés au corps soumis au couple vibratoire à compenser.

Les quatre axes 19, 20, 21, 22 sont parallèles au vecteur moment du couple à compenser.

Les masselottes 15 et 16 forment une première paire. Les masselottes de cette première paire tournent dans le même sens dans un même plan P₂, les axes de rotation 19 et 20 étant symétriques par rapport à un axe D perpendiculaire au plan P₂ et parallèle au vecteur moment du couple vibratoire à compenser.

En tournant, ces masselottes engendrent des forces centrifuges égales F₂ générant un simple couple appelé premier couple C₁ dont le vecteur moment a une direction parallèle à l'axe D et dont le module est sinusoïdal.

De la même manière, les masselottes 17 et 18 forment une seconde paire. Les masselottes de cette seconde paire tournent dans le même sens, qui est celui de la première paire, dans un même plan P₃ parallèle ou confondu avec le plan P₂. Les axes de rotation 21 et 22 sont également symétriques par rapport à l'axe D et l'écartement entre les axes 19 et 22 est égal à l'écartement entre les axes 20 et 21 noté d. De la même manière, les masselottes 17 et 18 sont telles et positionnées l'une par rapport à l'autre qu'elles génèrent deux forces centrifuges égales F₂ constituant un simple couple de même valeur que le couple C₁ , appelé second couple, et dont le vecteur moment est dirigé parallèlement à l'axe D et dont le module est sinusoïdal et déphasé d'un angle $2\theta_1$ par rapport au module du vecteur moment du premier couple. Ces deux couples conjugués donnent finalement un couple égal à : $2 C_1 \sin\omega t \cos\theta_1$.

De la même façon que précédemment, on voit qu'en respectant la condition $C = 2C_1 \cos\theta_1$, c'est-à-dire $\cos\theta_1 = C/2 m \omega^2 d r$, le dispositif compense exactement, à la fréquence $\omega/2\pi$, le couple vibratoire parasite C.

En pratique, comme le montre la figure 4 les masselottes 16 et 18 sont regroupées dans une même boîte 23 avec leur moteur d'entraînement et un accéléromètre de mesure, et les masselottes 15 et 17 sont regroupées dans une même boîte 24 avec leur moteur d' entraînement et aussi un accéléromètre de mesure. Les boîtes 23 et 24 sont placées symétriquement par rapport au plan vertical passant par l'axe de rotation du moteur 9.

Les axes des quatre masselottes pourraient aussi être tous situés dans un même plan horizontal perpendiculaire aux plans $P_2$ et $P_3$.

Les figures 5 et 6 représentent schématiquement le dispositif de commande, respectivement pour une compensation de force et pour une compensation de couple. Ces deux commandes sont identiques dans leur principe et comportent les mêmes éléments repérés par les mêmes références.

Sur la figure 5, relative à la commande pour la compensation d'une force, le système mécanique constitué par les boîtes 13 et 14 de la figure 3 est symbolisé par un rectangle 30.

Sur la figure 6, relative à la commande pour la compensation d'un couple, le système mécanique constitué par les boîtes 23 et 24 de la figure 4 est symbolisé par un rectangle 31.

Dans les deux cas, chaque moteur comporte un capteur de position angulaire 40 à 43 et chaque paire de masselottes comporte un accéléromètre 44 et 45.

Les signaux d' accélération $\gamma_1$ et $\gamma_2$ provenant des accéléromètres 44 et 45 permettent de calculer, dans un module calculateur 46 le signal résiduel $\epsilon(t) = (\gamma_1 + \gamma_2) M/2$ dans le cas d'une compensation d'une force vibratoire et $\epsilon(t) = (\gamma_1 - \gamma_2) J/d$ dans le cas d'une compensation d'un couple vibratoire. Formules dans lesquelles M représente la masse et J le moment d'inertie suivant l'axe de rotation du système vibrant.

Ce signal $\epsilon(t)$ est envoyé en entrée sur un sommateur 51. Le sommateur 51 reçoit en outre un signal $\hat{F}_a$ qui représente l'image de la force résultante générée par les masselottes. Ce signal $\hat{F}_a$ provient d'un module de calcul 52 qui utilise les signaux provenant des codeurs angulaires 40 à 43. Dans le cas de la figure 6 qui a trait à la compensation d'un couple vibratoire, le signal image du couple résultant généré par les masselottes est appelé $\hat{C}_a$.

Le signal F (ou C) en sortie du sommateur 51 est envoyé en entrée sur un filtre adaptatif non linéaire 47.

Ce filtre 47 est un filtre de Kalman à gains constants et est défini par les équations suivante :

Pour la compensation d'une force :

$$\frac{d\hat{F}}{dt} = -\hat{W}\hat{F}' + k_1 (F - \hat{F})$$

$$\frac{d\hat{F}'}{dt} = \hat{W}\hat{F}$$

$$\frac{d\tilde{W}}{dt} = -k_1 k_2 \hat{F}' (F - \hat{F})/(\hat{F}^2 + \hat{F}'^2)$$

Pour la compensation d'un couple :

$$\frac{d\hat{C}}{dt} = -\hat{W}\hat{C}' + k_1 (C - \hat{C})$$

$$\frac{d\hat{C}'}{dt} = \tilde{W}\hat{C}$$

$$\frac{d\tilde{W}}{dt} = -k_1 k_2 \hat{C}'(C-\hat{C})/(\hat{C}^2 + \hat{C}'^2)$$

formules dans lesquelles :

$\hat{F}$ est l'estimée de la force à compenser F

$\hat{\omega}$ est l'estimée de la pulsation en rd/s de la force à compenser

$\hat{F}'$ est une force fictive de même module que F en quadrature avec cette dernière

$k_1$ et $k_2$ sont des constantes du système.

Pour un couple, $\hat{C}$ est l'estimée du couple C à compenser et

$\hat{C}'$ est un couple fictif de même module que C et en quadrature avec C.

A la sortie de filtre 47 on obtient ainsi ces variables :

$\hat{F}$, $\hat{F}'$ et $\hat{\omega}$ pour une force (fig.5) et $\hat{C}$, $\hat{C}'$ et $\hat{\omega}$ pour un couple (fig.6), qui sont ensuite envoyées dans un bloc de calcul 48 afin d'en déduire la valeur du demi-déphasage $\theta$ (ou $\theta_1$) nécessaire pour générer une force (ou un couple) d'amplitude égale au module f de F ou c de C.

Dans le cas d'une force, on a :

$$\theta = \cos^{-1} (f/4\, m\, r\, \hat{\omega}^2)$$

Dans le cas d'un couple on a :

$$\theta_1 = \cos^{-1} (C/2\, m\, r\, d\, \hat{\omega}^2)$$

Ces valeurs $\theta$ ou $\theta_1$ servent alors à calculer les quatre consignes de vitesse $\omega_1$, $\omega_2$, $\omega_3$ et $\omega_4$ qui sont ensuite envoyées vers un bloc de calcul 49 dont le rôle est de générer les quatre tensions d'alimentation $u_1$, $u_2$, $u_3$ et $u_4$ de chacun des moteurs électriques des masselottes.

Ces quatre valeurs $\omega_1$, $\omega_2$, $\omega_3$ et $\omega_4$ sont toutes très peu différentes de $\hat{\omega}$ aux corrections nécessaires près pour obtenir le déphasage qui a été calculé.

La régulation qui assure la bonne adéquation entre les vitesses réelles des masselottes et les consignes envoyées est assurée par une boucle de régulation qui utilise les signaux des codeurs angulaires 40 à 43.

On voit que par rapport à l'art antérieur cité (EP A - 0 337 040), le signal d'entrée du filtre ne tend jamais vers zéro puisqu'il s'agit d'une reconstitution du signal d'excitation et non du signal résiduel. En outre les équations du filtre utilisé montrent que quelle soit les variations, dans le temps, des paramètres de l'excitation, le filtre les estime correctement et assure donc un fonctionnement correct non dépendant du temps.

## Revendications

**1.** Dispositif pour compenser une force vibratoire F créée par un corps (9, 10), le dispositif comportant quatre masselottes (1 à 4) tournantes, excentrées, situées dans un même plan P contenant le centre de gravité dudit corps vibrant, chaque masselotte étant entraînée par un moteur électrique, les axes de rotation (5 à 8) des masselottes étant parallèles, perpendiculaires au plan P et liés audit corps, les quatre masselottes comprenant une première paire de masselottes (1, 2) tournant en sens inverse l'une par rapport à l'autre et dont les axes de rotation sont symétriques par rapport à un plan $P_1$ contenant le centre de gravité dudit corps vibrant et perpendiculaire au plan P, et une deuxième paire de masselottes (3, 4) tournant en sens inverse l'une par rapport à l'autre et dont les axes de rotation sont symétriques par rapport audit plan $P_1$, les quatre masselottes tournant à la même vitesse ($\omega$), les masselottes de la première paire générant chacune une force tournante $F_1$ située dans le plan P, et se décomposant en une première composante parasite, sinusoïdale, selon un axe perpendiculaire au plan $P_1$ et en une seconde composante utile, sinusoïdale sur l'axe $\Delta$ formé par l'intersection des plans P et $P_1$, confondu avec la ligne d'application de la force F, les composantes parasites des forces tournantes de ladite première paire se compensant l'une l'autre et les composantes utiles étant en phase et de même amplitude, les masselottes de la seconde paire générant également deux forces tournantes situées dans ledit plan P et se décomposant chacune également en une première composante parasite, sinusoïdale selon un axe perpendiculaire au plan $P_1$ et en une seconde composante utile, sinusoïdale sur ledit axe $\Delta$, les composantes parasites des forces tournantes de ladite seconde paire se compensant l'une l'autre et les composantes utiles étant en phase et de même amplitude et étant déphasées d'un angle ($2\theta$) par rapport aux composantes utiles des forces tournantes de la première paire, au moins un accéléromètre (44, 45) sur chaque paire étant connecté à un calculateur (50) travaillant en temps réel et réalisant à la fois le calcul des valeurs estimées de la fréquence, de l'amplitude, de la phase et de la variation éventuelle de la fréquence au moyen d'un filtre adaptatif (47) de Kalman non linéaire qui calcule les estimations des paramètres ($\widehat{F}$, $\widehat{\omega}$) du signal d'excitation (F) à éliminer à partir d'un signal résiduel ($\epsilon(t)$), et l'asservissement des quatre moteurs grâce à des signaux provenant de codeurs angulaires (40 à 43) disposés sur chacun desdits moteurs, caractérisé en ce que ledit filtre adaptatif (47) reçoit sur son entrée un signal qui est la reconstitution du signal F à compenser obtenu en sommant le signal résiduel ($\epsilon(t)$) et le signal image $\widehat{F}_a$ représentatif de la force résultante générée par les masselottes, ledit signal $\widehat{F}_a$ étant obtenu à partir des signaux en provenance desdits codeurs angulaires (40 à 43), ledit filtre adaptatif non linéaire étant un filtre de Kalman à gains constants.

2. Dispositif pour compenser un couple vibratoire C créé par un corps (9, 10), le dispositif comprenant quatre masselottes tournantes excentrées (15 à 18) tournant à la même vitesse ($\omega$), chaque masselotte étant entraînée par un moteur électrique, les axes (19 à 22) de rotation des masselottes étant parallèles au vecteur moment du couple vibratoire à compenser et étant liés audit corps, les quatre masselottes comprenant une première paire de masselottes (15, 16) tournant l'une et l'autre dans le même sens dans un même plan $P_2$ et dont les axes de rotation sont symétriques par rapport à un axe D perpendiculaire au plan $P_2$, et une deuxième paire de masselottes (17, 18) tournant l'une et l'autre dans le même sens dans un même plan $P_3$ parallèle ou confondu avec le plan $P_2$ et dont les axes de rotation sont symétriques par rapport à l'axe D, les masselottes de la première paire générant deux forces tournantes $F_2$ situées dans le plan $P_2$, constituant un simple couple appelé premier couple dont le vecteur moment est dirigé parallèlement à l'axe D et dont le module est sinusoïdal, les masselottes de la seconde paire générant également deux forces tournantes $F_2$ situées dans le plan $P_3$ constituant un simple couple appelé second couple dont le vecteur moment est dirigé parallèlement à l'axe D et dont le module est sinusoïdal, les modules des premier et second couples étant déphasés d'un angle ($2\theta_1$) l'un par rapport à l'autre, au moins un accéléromètre (44, 45) sur chaque paire étant connecté à un calculateur (50) travaillant en temps réel et réalisant à la fois le calcul des valeurs estimées de la fréquence, de l'amplitude, de la phase et de la variation éventuelle de la fréquence au moyen d'un filtre adaptatif de Kalman non linéaire qui calcule les estimations des paramètres ($\widehat{C}$, $\widehat{\omega}$) du signal d'excitation (C) à éliminer à partir d'un signal résiduel ($\epsilon(t)$) (47), et l'asservissement (49) des quatre moteurs grâce à des signaux provenant de codeurs angulaires (40 à 43) disposés sur chacun desdits moteurs, caractérisé en ce que ledit filtre adaptatif (47) reçoit sur son entrée un signal qui est la reconstitution du signal C à compenser obtenu en sommant le signal résiduel ($\epsilon(t)$) et le signal image $\widehat{C}_a$ représentatif du couple résultant généré par lesdites masselottes, ledit signal $\widehat{C}_a$ étant obtenu à partir des signaux en provenance desdits codeurs angulaires, ledit filtre adaptatif non linéaire étant un filtre de Kalman à gains constants.

## Claims

1. Device for compensating a vibrational force F generated by a body (9, 10), the device comprising four eccentric rotating weights (1 to 4) located in a common plane P containing the centre of gravity of said vibrating body, each weight being driven by an electric motor, the rotation axes (5 to 8) of the weights being parallel to each other, perpendicular to the plane P and fixed with respect to said body, the four weights comprising a first pair of contrarotating weights (1, 2) whose rotation axes are symmetrical relative to a plane $P_1$ containing the centre of gravity of said vibrating body and perpendicular to the plane P and a second pair of contrarotating weights (3, 4) whose rotation axes are symmetrical relative to said plane $P_1$, the four weights rotating at the same angular frequency ($\omega$), the weights of the first

7

pair each generating a rotating force $F_1$ located in the plane P and comprising a sinusoidal unwanted first component about an axis perpendicular to the plane $P_1$ and a sinusoidal wanted second component about the axis $\Delta$ defined by the intersection of the planes P and $P_1$ coincident with the line of application of the force F, the unwanted components of the rotating forces of said first pair cancelling each other out and the wanted components being in phase and of the same amplitude, the weights of the second pair also generating two rotating forces located in said plane P and each having a sinusoidal unwanted first component about an axis perpendicular to the plane $P_1$ and a sinusoidal wanted second component about said axis $\Delta$, the unwanted components of the rotating forces of said second pair cancelling each other out and the wanted components being in phase with each other and of the same amplitude and phase-shifted by an angle $(2\theta)$ relative to the wanted components of the rotating forces of the first pair, at least one accelerometer (44, 45) on each pair being connected to a real time computer (50) adapted to calculate estimated values of the frequency, amplitude, phase and any variation in frequency by means of a non-linear adaptive Kalman filter (47) which computes estimated parameters of the excitation signal to be eliminated from a residual signal and to control the four motors by means of signals produced by angular encoders (40 to 43) disposed on each of said motors, characterized in that said adaptive filter (47) receives at its input a signal which reconstitutes the signal F to be compensated obtained by summing the residual signal $\epsilon(t)$ and the image signal $\widehat{F}_a$ representing the resultant force generated by the weights, said signal $\widehat{F}_a$ is derived from signals from said angular encoders (40 to 43) and said non-linear adaptive filter is a constant gain Kalman filter.

2. Device for compensating a vibrational torque C generated by a body (9, 10), the device comprising four eccentric rotating weights (15 to 18) rotating at the same angular frequency $(\omega)$, each weight being driven by an electric motor, the rotation axes (19 to 22) of the weights being parallel to the moment vector of the vibrational torque to be compensated and being fixed with respect to said body, the four weights comprising a first pair of weights (15, 16) rotating in the same direction in a common plane $P_2$ and whose rotation axes are symmetrical relative to an axis D perpendicular to the plane $P_2$ and a second pair of weights (17, 18) rotating in the same direction in a common plane $P_3$ parallel to or coincident with the plane $P_2$ and whose rotation axes are symmetrical relative to the axis D, the weights of the first pair generating two rotating forces $F_2$ located in the plane $P_2$ constituting a first torque whose moment vector is parallel to the axis D and whose modulus is sinusoidal, the weights of the second pair also generating rotating forces $F_2$ located in the plane $P_3$ constituting a second torque whose moment vector is parallel to the axis D and whose modulus is sinusoidal, the moduli of the first and second torques being out of phase with each other by an angle $(2\theta_1)$, at least one accelerometer (44, 45) on each pair being connected to a real time computer (50) adapted to compute estimated values of the frequency, amplitude, phase and any variation in frequency by means of an adaptive non-linear Kalman filter which computes estimated parameters $(\widehat{C}, \widehat{\omega})$ of the excitation signal (C) to be eliminated from a residual signal $(\epsilon(t))$ and to control (49) the four motors using signals from angular encoders (40 to 43) disposed on each of said motors, characterized in that said adaptive filter (47) receives on an input a signal which reconstitutes the signal C to be compensated obtained by summing the residual signal $(\epsilon(t))$ and the image signal $\widehat{C}_a$ representing the resultant torque generated by said weights, said signal $\widehat{C}_a$ is derived from signals from said angular encoders and said non-linear adaptive filter is a constant gain Kalman filter.

**Patentansprüche**

1. Anordnung zum Kompensieren einer von einem Körper (9, 10) erzeugten Vibrationskraft F, mithilfe von vier exzentrischen, drehenden Fliehgewichten (1 bis 4) aufweist, die sich in einer gleichen Ebene P befinden, welche den Schwerpunkt des vibrierenden Körpers enthält, wobei jedes Fliehgewicht von einem Elektromotor angetrieben wird, und die Drehachsen (5 bis 8) der Fliehgewichte parallel zueinander und senkrecht zur Ebene P verlaufen und mit dem Körper verbunden sind, wobei zu den vier Fliehgewichten ein erstes Paar Fliehgewichte (1, 2), die einander entgegengesetzt drehen und deren Drehachsen symmetrisch zu einer Ebene $P_1$ liegen, die den Schwerpunkt des vibrierenden Körpers enthält und senkrecht zur Ebene P verläuft, und ein zweites Paar Fliehgewichte (3, 4) gehören, die zueinander entgegengesetzt drehen und deren Drehachsen zur Ebene $P_1$ symmetrisch verlaufen, wobei sich die vier Fliehgewichte mit der gleichen Winkelgeschwindigkeit $\omega$ drehen, und jedes der Fliehgewichte des ersten Paares eine Drehkraft $F_1$ erzeugt, die in der Ebene P liegt und sich in eine erste sinusförmige Störkomponente entlang einer senkrecht zur Ebene $P_1$ verlaufende Achse und in eine zweite sinusförmige Nutzkomponente entlang der durch die Schnittlinie der Ebenen P und $P_1$ gebilde-

ten Achse $\Delta$ aufteilt, die mit der Angriffsrichtung der Kraft F zusammenfällt, wobei sich die Störkomponenten der Drehkräfte des ersten Paares gegenseitig ausgleichen, wogegen die Nutzkomponenten gleichphasig sind und die gleiche Amplitude aufweisen, während die Fliehgewichte des zweiten Paares ebenfalls zwei Drehkräfte in der Ebene P erzeugen, die sich je ebenfalls in eine erste sinusförmige Störkomponente entlang einer Achse senkrecht zur Ebene $P_1$ und in eine zweite sinusförmige Nutzkomponente entlang der Achse $\Delta$ aufteilen, wobei sich die Störkomponenten der Drehkräfte des zweiten Paares gegenseitig ausgleichen, während die Nutzkomponenten gleichphasig sind und gleiche Amplitude aufweisen und relativ zu den Nutzkomponenten der Drehkräfte des ersten Paares um einen Winkel ($2\theta$) phasenverschoben sind, wobei für jedes Paar mindestens ein Beschleunigungsmesser (44, 45) an einen Rechner (50) angeschlossen ist, der in Echtzeit arbeitet und die Schätzwerte der Frequenz, der Amplitude, der Phase und der eventuellen Änderung der Frequenz mithilfe eines nichtlinearen sich anpassenden Kalman-Filters (47) berechnet, welches die Schätzwerte des Parameters ($F,\omega$) des eliminierenden Erregersignals (F) aus einem Restsignal ($\epsilon(t)$) berechnet, und die vier Motoren mithilfe von Signalen nachregelt, die von Winkelkodierern (40 bis 43) geliefert werden, die auf jedem Motor angebracht sind, dadurch gekennzeichnet, daß das sich anpassende Filter (47) an seinem Eingang ein Signal empfängt, das ein Bild des zu kompensierenden Signals F darstellt und durch Summieren des Restsignals ($\epsilon(t)$) und des Bildsignals $F_a$ erhalten wird, welches die durch die Fliehgewichte erzeugte resultierende Kraft darstellt, wobei das Signal $F_a$ aus Signalen gewonnen wird, die von den Winkelkodierern (40 bis 43) stammen, und wobei das nichtlineare sich anpassende Filter ein Kalman-Filter mit konstanter Verstärkung ist.

2.  Anordnung zum Kompensieren eines von einem Körper (9, 10) erzeugten Vibrationsmoments C mithilfe von vier exzentrischen, drehenden Fliehgewichten (15 bis 18), die sich mit derselben Geschwindigkeit ($\omega$) drehen und je von einem Elektromotor angetrieben werden, wobei die Drehachsen (19 bis 22) der Fliehgewichte sich parallel zum Momentenvektor des zu kompensierenden Vibrationsmoments erstrekken und mit dem Körper verbunden sind, wobei zu den vier Fliehgewichten ein erstes Paar Fliehgewichte (15, 16), die in gleicher Richtung in einer gemeinsamen Ebene $P_2$ drehen und deren Drehachsen relativ zu einer zur Ebene $P_2$ senkrecht verlaufenden Achse D symmetrisch liegen, und ein zweites Paar Fliehgewichte (17, 18) gehören, die in gleicher Richtung in einer Ebene $P_3$ drehen, die parallel zur Ebene $P_2$ verläuft oder mit dieser zusammenfällt, und deren Drehachsen symmetrisch zur Achse D liegen, wobei die Fliehgewichte des ersten Paares zwei in der Ebene $P_2$ gelegene Drehkräfte $F_2$ erzeugen, die ein einfaches Moment bilden, erstes Moment genannt, dessen Momentenvektor parallel zur Achse D gerichtet ist und dessen Amplitude sinusförmig ist, wobei die Fliehgewichte des zweiten Paares ebenfalls zwei in der Ebene $P_3$ gelegene Drehkräfte $F_2$ erzeugen, die ein einfaches Moment bilden, zweites Moment genannt, dessen Momentenvektor parallel zur Achse D gerichtet ist und dessen Amplitude sinusförmig ist, wobei die Amplituden des ersten und des zweiten Moments relativ zueinander um einen Winkel ($2\theta_1$) phasenverschoben sind und mindestens ein Beschleunigungsmesser (44, 45) jedes Paars an einen Rechner (50) angeschlossen ist, der in Echtzeit arbeitet und die der Schätzwerte der Frequenz, der Amplitude, der Phase und der eventuellen Änderung der Frequenz mithilfe eines nichtlinearen sich anpassenden Kalman-Filters (47) berechnet, welches die Schätzwerte des Parameters ($C, \omega$) des zu eliminierenden Erregersignals (C) aus einem Restsignal ($\epsilon(t)$) berechnet sowie die vier Motoren mithilfe von Signalen nachregelt (49), die von Winkelkodierern (40 bis 43) geliefert werden, die auf jedem Motor angebracht sind, dadurch gekennzeichnet, daß das sich anpassende Filter (47) an seinem Eingang ein Signal empfängt, das die Nachbildung des zu kompensierenden Signals C darstellt, und durch Summieren des Restsignals ($\epsilon(t)$) und des Bildsignals $C_a$ erhalten wird, welches das durch die Fliehgewichte erzeugte resultierende Moment darstellt, wobei das Signal $C_a$ aus Signalen gewonnen wird, die von den Winkelkodierern stammen und wobei das nichtlineare sich anpassende Filter ein Kalman-Filter mit konstanter Verstärkung ist.

# FIG. 1

# FIG. 2

# FIG.3

# FIG.4

# FIG. 5

# FIG. 6